# EUROPÄISCHE PATENTSCHRIFT

(11) **EP 2 351 176 B1**
(45) Veröffentlichungstag und Bekanntmachung des Hinweises auf die Patenterteilung: **31.07.2019**
(21) Anmeldenummer: 09756422.3
(22) Anmeldetag: 02.11.2009
(51) Int. Cl.: H02G 3/12

(54) **ELEKTRISCHES INSTALLATIONSGERÄT**
ELECTRICAL INSTALLATION APPARATUS
BOÎTE D'INSTALLATION ÉLECTRIQUE

(30) Priorität: 04.11.2008 DE 102008055728
(43) Veröffentlichungstag der Anmeldung: 03.08.2011
(73) Patentinhaber: Schneider Electric Industries SAS, 92500 Rueil-Malmaison (FR)
(72) Erfinder: VICKTORIUS, Richard, 50733 Köln (DE)
(74) Vertreter: Manitz Finsterwald Patent- und Rechtsanwaltspartnerschaft mbB
(86) Internationale Anmeldenummer: PCT/EP2009/007835
(87) Internationale Veröffentlichungsnummer: WO 2010/051956

(56) Entgegenhaltungen:
- EP-A1- 0 613 224
- EP-A1- 1 610 422
- DE-A1- 3 828 177
- DE-A1-102007 063 584
- DE-U1- 29 904 984

## Beschreibung

Die Erfindung betrifft ein elektrisches Installationsgerät. Ein elektrisches Installationsgerät nach dem Oberbegriff des Patentanspruchs 1 ist aus dem Dokument EP1610422A1 bekannt.

Elektrische Installationsgeräte werden im Rahmen der Gebäudeinstallationstechnik sowohl bei der Erstausstattung als auch im Nachrüstbereich eingesetzt. Häufig ist es wichtig, das jeweilige elektrische Installationsgerät funktional aufrüsten zu können. Aus diesem Grund hat es sich als vorteilhaft erwiesen, entsprechende Baugruppen zu schaffen, mit denen bei Bedarf das vorhandene Gerät ergänzt werden kann. Aus dem Stand der Technik ist beispielsweise ein Installationsgerät bekannt, bei dem eine Baugruppe optional rückseitig nachgerüstet werden kann.

Häufig weist ein derartiges Installationsgerät einen Sockel auf, der grundlegende Funktionalitäten besitzt, sowie ein daran befestigtes Frontelement, das durch unterschiedliche Formen und Farben Varianten des Installationsgerätes ermöglicht. Die Integration von zusätzlichen Funktionen in die Installationsgeräte durch optional anordenbare Baugruppen, vorzugsweise im Sockelbereich, erfordert auch speziell angepasste Frontelemente, so dass eine sockelseitige Aufrüstung eine entsprechend große Anzahl an abhängigen Varianten von Frontelementen erfordert. Hierdurch ergeben sich einerseits hohe Produktions- und Lagerkosten und andererseits für den Monteur eine hohe Anzahl von kombinierbaren Ausstattungsvarianten.

Die Aufgabe der vorliegenden Erfindung besteht deshalb darin, die vorstehend genannten Nachteile zu beseitigen und ein aufrüstbares Installationsgerät zu schaffen, das ein Maximum an optionalen Funktionen durch ein Minimum an unterschiedlichen Baugruppen ermöglicht und das montagefreundlich und komfortabel ist.

Gelöst wird diese Aufgabe durch die in Patentanspruch 1 angegebenen Merkmale. Vorteilhafte Ausgestaltungen ergeben sich aus der Beschreibung, der Zeichnung und den Unteransprüchen.

Die Erfindung gemäß Anspruch 1 weist den Vorteil auf, dass ein elektrisches Installationsgerät mit Basisbauteilen, umfassend einen Gerätesockel und ein Frontelement, einfach und multifunktional auf- und umgerüstet werden kann und somit ein vielseitig verwendbares und leicht konfigurierbares Installationsgerät geschaffen wird.

Vorteilhaft ist dabei, dass das Installationsgerät gleichzeitig mit mindestens zwei Modulen aufgerüstet werden kann, die sich funktional ergänzen und an verschiedenen Bauteilen des Installationsgerätes angeordnet sind. Vorzugsweise kann dabei eine gruppierte Zuordnung der Funktionalitäten auf die beiden Module erfolgen. So können beispielsweise in einem ersten Modul übergeordnete oder geräteinterne Funktionen zusammengefasst und in einem zweiten Modul konfigurationsspezifische bzw. nutzerrelevante Funktionen realisiert sein.

Hierdurch kann ein großes Funktionsspektrum und eine Vielzahl von Konfigurationen mit einem Minimum an Baugruppen realisiert werden, da die gezielte Bündelung von Funktionen, z. B. in Basisfunktionen und in spezifische Funktionen, eine variable Nutzung von Modulen ermöglicht. Definierte Schnittstellen zwischen den Modulen schaffen einen hohen Grad an Kompatibilität. Darüber hinaus werden durch die geringe Anzahl an Modulen die Fertigungs- und Lagerkosten reduziert.

Vorzugsweise kann ein Modul im Bereich des Gerätesockels angeordnet sein, während ein zweites Modul an dem Frontelement des Installationsgerätes angeordnet sein kann. Die Module können dabei in sich geschlossene Baugruppen bilden, so dass weder am Sockel noch an dem Frontelement für deren Adaption Veränderungen notwendig sind. Die Module sind vorzugsweise lösbar befestigt, wobei jedoch auch unlösbare Verbindungen vorteilhaft sein können.

Die Module können optische oder mechanische Bauelemente enthalten. Hierzu können auch elektrische, optische und/oder mechanische Schnittstellen zwischen den Modulen ausgebildet sein und entsprechende Funktionalitäten und Signale übermittelt werden. Neben konventioneller Installationstechnik ist hier auch die Verwendung von Bustechnologien möglich. Vorteilhaft können hier neben drahtgebundenen auch nicht drahtgebundene Komponenten sein, beispielsweise zur Datenübertragung mittels Funk- oder Infrarotsignalen.

Vorteilhafterweise erfolgt in einem ersten Modul die funktionsrelevante Signalerzeugung, während in einem zweiten Modul die Aufbereitung des Signals für den Endnutzer oder für eine weitere Nutzung geschieht.

Wenn ein Modul an dem Frontelement angeordnet ist, kann dieses anwenderspezifische Funktionen aufweisen, beispielsweise visuell oder akustisch wirkende Zustandsmeldungen. Dagegen kann in einem sockelseitigen Modul die funktionsgerechte Strom-/Spannungsversorgung angeordnet werden, wobei die eingehende Netzspannung beispielsweise in eine beliebige kleinere Spannung oder andere Energieart umgewandelt werden kann. Dadurch kann zwischen den beiden Modulen eine vorteilhafte Trennung zwischen Last- und Signalbereich vorgenommen werden.

Bevorzugte Anwendungsbereiche für die Erfindung ergeben sich im Bereich der Beleuchtung bzw. allgemein der Darstellung von Information an Steckdosen, Schaltern und anderen Installationsgeräten. Dabei bietet der modulare Ansatz gerade im Bereich von stufenweise aufbauenden Ausstattungsvarianten (light, premium) einen vorteilhaften Lösungsansatz. Verwendung kann die Erfindung insbesondere bei der Integration von zusätzlichen Funktionalitäten in Schaltern oder Steckdosen finden, z. B. Bild- oder Tonaufnahme bzw. -aussendung, Alarmfunktionen, Überspannungsschutz, Identifikationsfunktionen, Anzeige- und Beleuchtungsmodule, Datenverarbeitungsmodule und/oder mechanische Funktionsmodule. Auch kann es vorteilhaft sein, wenn die Module bzw. die Funktionen durch integrierte Befehlseingabegeräte oder externe Geräte veränderbar und/oder programmierbar sind.

Bei einer vorteilhaften Ausführungsform der Erfindung ist als ein Basismodul ein Überspannungsschutz vorgesehen, das die eigentlichen Überspannungsfunktionen enthält, während das Frontelement mit einem optionalen Anzeigemodul ausgestattet ist.

An den Modulen können Schnittstellen vorhanden sein, über die Signale zur Ansteuerung eines Anzeigemoduls weitergegeben werden. Die Anforderungen an die Darstellung der Informationen können jedoch sehr unterschiedlich sein, z. B. mittels Display oder Beleuchtungskörpern oder in verschiedenen Farben, Intensitäten und Sprachen. Trotz dieser unterschiedlichen Konfigurationen kann erfindungsgemäß das Basismodul Überspannungsschutz unverändert bestehen bleiben, da bei gleichbleibender Signalinformation an der Schnittstelle nur ein geeignetes Anzeigemodul gewählt werden muss.

Andererseits kann bei funktional bedingten Veränderung des Basismoduls und damit der Signalinformationen, z. B. der Wechsel von einem Überspannungsschutzmodul zu einem reinen Beleuchtungsmodul, das Anzeigemodul in dem Frontelement unverändert weiter benutzt werden. So kann ein reines Informationsmodul vorteilhaft sein, das auch an wechselnden Basismodulen verwendet werden kann. Insbesondere durch die Signalbelegung an den Schnittstellen können schon unterschiedliche Anzeigeoptionen in ein und demselben Anzeigemodul realisiert werden.

Die erfindungsgemäße Anordnung kann sowohl in Aufputz- als auch in Unterputzinstallationen realisiert werden.

Die Module können vor, hinter, seitlich oder an einer anderen Stelle des Frontelementes bzw. des Gerätesockels angeordnet sein, sofern eine einwandfreie Verbindung zwischen den Modulen gewährleistet ist. Abhängig vom Montageplatz können die Module die unterschiedlichsten Außenformen aufweisen, z.B. länglich, abgewinkelt, zylindrisch usw. Die Module können insbesondere optische, mechanische und/oder elektrische Bauelemente enthalten, die beispielsweise auf einer Leiterplatte angeordnet und verschaltet sind.

In bevorzugt ausgebildeten Installationsgeräten ist eine platzsparende Anordnung von Modulen möglich. Dabei sind durch vorteilhafte Bauteilanordnungen innerhalb der vorhandenen Struktur des Installationsgerätes Aufnahmeräume und -bereiche geschaffen, so dass die Module vorzugsweise formschlüssig und flächenbündig integriert werden können. Es wird kein zusätzlicher Platz benötigt und die bereits vorhandene Struktur des Installationsgerätes, insbesondere deren Abmessungen und deren Befestigungs- und Kontaktpunkte, bleibt unverändert erhalten.

Sockelseitig ist eine frontseitige Anordnung des Moduls aufgrund der vorteilhaften Zugänglichkeit vorteilhaft, da der Gerätesockel für die Montage nicht aus dem Installationsgehäuse gelöst werden muss.

Da lediglich das entsprechende Frontelement entfernt werden muss, um das Modul einsetzen zu können, entsteht ein erheblicher Installationsvorteil. Frontelemente können mehrteilig ausgebildet sein und je nach Ausführung auch unterschiedlich gestaltete Elemente aufweisen. In der Regel ist jedoch ein Zentralelement wie beispielsweise Schalter, Taster, Display oder Steckdose von einer Blende und/oder einem Rahmen umgeben. Die Anordnung des einen Moduls kann sowohl an dem Zentralelement als auch an der Blende/dem Rahmen erfolgen.

Der elektrische Anschluss der Module erfolgt vorteilhafterweise mit einer lösbaren Technik, insbesondere mittels Steckung, an die entsprechenden Anschlussklemmen oder Kontaktelemente. Die Kontaktierung der Module erfolgt während der Montage selbsttätig. Die entsprechenden Kontaktelemente des Installationsgerätes und des zu adaptierenden Moduls sind vorzugsweise berührungsgeschützt angeordnet.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:
- Fig. 1: schematisch eine Installationsanordnung mit frontseitiger Modulanordnung und einem Anzeigemodul in einem Front-element.
- Fig. 2: schematisch ein weiteres Ausführungsbeispiel einer Installationsanordnung mit frontseitiger Modulanordnung und einem Anzeigemodul in einem Frontelement.

Gleiche oder gleichwirkende Bauteile sind in der nachfolgenden Beschreibung mit gleichen Bezugszeichen versehen.

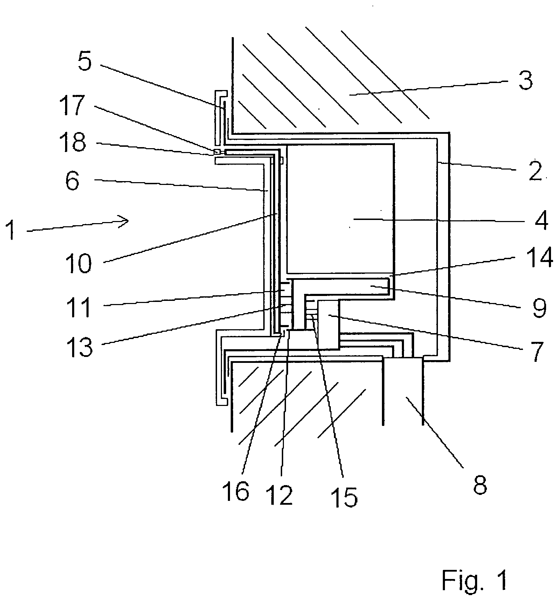

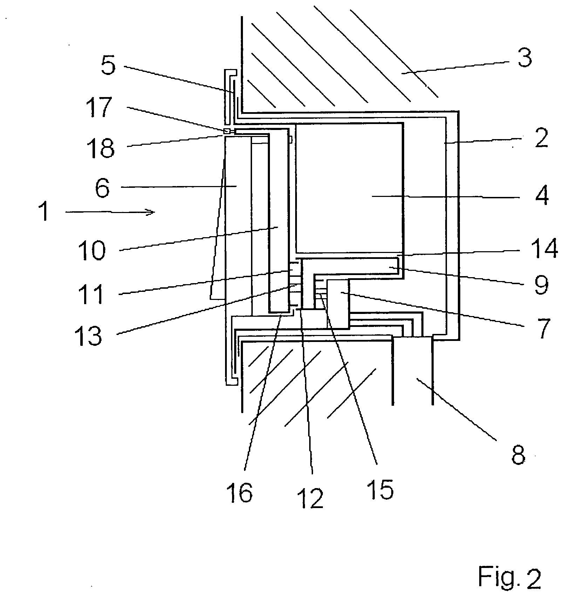

Nachfolgend wird der Aufbau und die Funktionsweise des erfindungsgemäßen elektrischen Installationsgerätes 1 schematisch anhand von alternativen Ausführungsbeispielen näher beschrieben. In Fig. 1 ist dabei beispielhaft ein elektrisches Installationsgerät 1 in Form einer Steckdose dargestellt, während in Fig. 2 ein elektrisches Installationsgerät 1 in Form eines Schalters dargestellt ist.

Das elektrische Installationsgerät 1 ist in einem Installationsgehäuse 2 befestigt, welches ortsfest in einer Gebäudewand 3 fixiert ist. Das elektrische Installationsgerät 1 weist einen Gerätesockel 4 auf, den außenseitig ein Tragrahmen 5 umgibt, der die Befestigung des Installationsgerätes 1 in dem Installationsgehäuse 2 ermöglicht. Frontseitig ist ein funktionsspezifisches Frontelement 6 befestigt, das je nach Anwendung ein- oder mehrteilig sein kann und gemäß Fig. 1 einen topfförmigen Bereich zur frontseitigen Aufnahme eines nicht dargestellten Gerätesteckers aufweist. In dem Gerätesockel 4 sind Anschlussklemmen 7 und damit verbundene metallische Kontaktelemente angeordnet, die mit Gegenkontakten des Gerätesteckers in Eingriff kommen. Eine wandseitig verlegte Versorgungsleitung 8 versorgt das Gerät mit einer Netzspannung, wobei deren einzelne Leitungen lösbar in den Anschlussklemmen 7 fixiert sind.

Des Weiteren sind in dem Installationsgerät 1 ein erstes Modul 9 und ein zweites Modul 10 angeordnet. Mit den beiden Modulen 9 und 10 wird gemäß Fig. 1 ein Überspannungsschutz realisiert, wobei hierzu nicht näher dargestellte elektrische und/oder optische Bauteile in den beiden Modulen 9 und 10 angeordnet sind. In dem ersten Modul 9 sind die eigentlichen Überspannungsschutzfunktionen (Spannungsunterbrechung) realisiert, während in dem zweiten Modul 10 die nutzerseitigen Informationen aufbereitet und visualisiert werden. Die beiden Module 9 und 10 kommunizieren über Schnittstellen 11 und 12, an denen Signale für die Ansteuerung von Leuchtmitteln vom ersten Modul 9 zum zweiten Modul 10 übertragen werden. Die Schnittstellen 11 und 12 sind dabei in die Gehäusekörper der Module 9 und 10 integriert und aufgrund komplementärer Formen leicht und unverwechselbar ineinander steckbar. Dabei greifen beispielsweise Steckkontakte 13 ineinander. Vorzugsweise wird deren Verbindung unter federnder Krafteinwirkung aufrechterhalten.

Das erste Modul 9 ist frontseitig des Installationsgerätes 1 in einem Aufnahmeraum 14 des Gerätesockels 4 angeordnet. Im unbestückten Zustand verschließt eine entfernbare Abdeckung (nicht dargestellt) diesen Aufnahmeraum 14, in den das Modul 9 formschlüssig einsetzbar und rastend fixierbar ist. Bodenseitig sind Anschlusskontakte 15 berührungsgeschützt aus dem Modul 9 geführt, die mit den Anschlussklemmen 7 in dem Gerätesockel 4 elektrisch kontaktierbar sind. Oberseitig des Moduls 9 befindet sich die Schnittstelle 11, um Signale an das Frontelement 6 leiten zu können.

Das zweite Modul 10 ist winklig ausgebildet und rückseitig bzw. seitlich des Frontelementes 6 in einem entsprechenden Aufnahmebereich 16 angeordnet. Das Modul 10 ist vorzugsweise flach ausgeführt und formschlüssig bzw. rastend fixierbar. Rückseitig ist eine Schnittstelle 12 mit Anschlusskontakten 13 berührungsgeschützt aus dem Modul 10 geführt, die mit der Schnittstelle 11 des ersten Moduls 9 in dem Gerätesockel 4 elektrisch kontaktierbar ist. Oberseitig des zweiten Moduls 10 sind Leuchtmittel 17 ausgeführt, die nach der Montage des Moduls 10 in entsprechenden Ausnehmungen 18 des Frontelementes 6 greifen und nutzerseitig den Status des Überspannungsschutzes visualisieren.

Für die Montage des ersten Moduls 9 wird das Frontelement 6 und anschließend die Abdeckung des Aufnahmeraumes 14 entfernt. Das Modul 9 kann formschlüssig ohne Verkantungen linear bis zu einem hinteren Anschlag in den Aufnahmeraum 14 geschoben werden. Automatisch wird es dabei sowohl mechanisch verrastet als auch elektrisch an die Netzspannung angeschlossen, indem die Anschlusskontakte 15 des Moduls 9 in nicht näher dargestellte Kontaktelemente der Anschlussklemmen 7 des Gerätesockels eingesteckt werden.

Das zweite Modul 10 wird rückseitig des Frontelementes 6 in dem Aufnahmebereich 16 formschlüssig bzw. rastend fixiert. Oberseitig greifen dabei die Leuchtmittel 17 in die Ausnehmungen 18 des Frontelementes 6 ein. Abschließend wird das Frontelement 6 wieder an dem Gerätesockel 4 montiert, wobei die beiden Module 9 und 10 an ihren Schnittstellen 11 und 12 selbsttätig und berührungsgeschützt ineinander greifen und kontaktieren. In diesem Ausführungsbeispiel sind weder ein Ausbau des Installationsgerätes 1 noch zusätzliche Anschlussarbeiten notwendig.

Das Installationsgerät 1 gemäß Fig. 2 unterscheidet sich von der vorbeschriebenen Fig. 1 durch die Ausführung des Frontelementes 6. Das dargestellte Frontelement 6 ist als Schalter ausgebildet. Die Module 9 und 10 weisen die gleiche Struktur und Anordnung auf, sind jedoch in ihrer Funktion nur noch für die Beleuchtung des Installationsgerätes 1 ausgelegt. Die übrigen Elemente und Funktionen des Installationsgerätes 1 sind unverändert.

### Bezugszeichenliste

- 1: Installationsgerät
- 2: Installationsgehäuse
- 3: Gebäudewand
- 4: Gerätesockel
- 5: Tragrahmen
- 6: Frontelement
- 7: Anschlussklemmen
- 8: Versorgungsleitung
- 9: erstes Modul
- 10: zweites Modul
- 11: Schnittstelle
- 12: Schnittstelle
- 13: Steckkontakte
- 14: Aufnahmeraum
- 15: Anschlusskontakte
- 16: Aufnahmebereich
- 17: Leuchtmittel
- 18: Ausnehmung

## Patentansprüche

1. Elektrisches Installationsgerät (1) umfassend einen Gerätesockel (4), der mittels eines Tragrahmens (5) in einem Installationsgehäuse (2) befestigbar ist, und ein frontseitig befestigtes Frontelement (6), wobei im Gerätesockel (4) angeordnete Kontaktelemente an eine Netzspannung anschließbar sind,
**dadurch gekennzeichnet, dass**
das Installationsgerät (1) nach Befestigung im Installationsgehäuse (2) frontseitig mit mindestens zwei Modulen erweitert ist, nämlich mit einem ersten Modul (9) und mit mindestens einem zweiten Modul (10), die elektrische Bauelemente enthalten, funktional zusammenwirken und an unterschiedlichen Bauteilen (4, 6) des Installationsgerätes (1) angeordnet sind, und dass bei einer mechanischen Positionierung der Module (9, 10) am Frontelement (6), am Gerätesockel (4) und/oder der Module (9, 10) untereinander eine selbsttätige elektrische Kontaktierung erfolgt.

2. Elektrisches Installationsgerät nach Patentanspruch 1, **dadurch gekennzeichnet, dass** das eine Modul (9) übergeordnete und/oder geräteinterne Funktionen beinhaltet und dass das andere Modul (10) nutzerrelevante Funktionen beinhaltet.

3. Elektrisches Installationsgerät nach einem der vorhergehenden Patentansprüche, **dadurch gekennzeichnet, dass** in dem einen Modul (9) Signale erzeugt und an das andere Modul (10) übergeben werden.

4. Elektrisches Installationsgerät nach einem der vorhergehenden Patentansprüche, **dadurch gekennzeichnet, dass** Signale in dem zweiten Modul (10) empfangbar, wandelbar und/oder weiterleitbar sind.

5. Elektrisches Installationsgerät nach einem der vorhergehenden Patentansprüche, **dadurch gekennzeichnet, dass** die Netzspannung in einem Modul (9) transformiert wird und dann an das andere Modul (10) geleitet wird.

6. Elektrisches Installationsgerät nach einem der vorhergehenden Patentansprüche, **dadurch gekennzeichnet, dass** die Module (9, 10) über komplementäre Schnittstellen (11, 12) mechanisch, elektrisch und/oder optisch verbindbar sind.

7. Elektrisches Installationsgerät nach Anspruch 6, **dadurch gekennzeichnet, dass** die Schnittstellen (11, 12) gehäuseseitig in die Module (9, 10) integriert sind.

8. Elektrisches Installationsgerät nach einem der vorhergehenden Patentansprüche 6 oder 7, **dadurch gekennzeichnet, dass** in den Schnittstellen (11, 12) Kontakte (13) berührungsgeschützt angeordnet sind.

9. Elektrisches Installationsgerät nach einem der vorhergehenden Patentansprüche, **dadurch gekennzeichnet, dass** in einem Modul (10) optische und/oder akustische Signalgeber (17) angeordnet sind.

10. Elektrisches Installationsgerät nach einem der vorhergehenden Patentansprüche, **dadurch gekennzeichnet, dass** in einem Modul (10) manuelle Befehlsgeber angeordnet sind.

11. Elektrisches Installationsgerät nach einem der vorhergehenden Patentansprüche, **dadurch gekennzeichnet, dass** die Module (9, 10) extern programmierbar sind.

12. Elektrisches Installationsgerät nach einem der vorhergehenden Patentansprüche, **dadurch gekennzeichnet, dass** ein Modul (9) am Gerätesockel (4) und ein Modul (10) an dem Frontelement (6) angeordnet ist.

13. Elektrisches Installationsgerät nach einem der vorhergehenden Patentansprüche, **dadurch gekennzeichnet, dass** die Module (9, 10) lösbar an dem Gerätesockel (4) und/oder an dem Frontelement (6) befestigbar sind.

14. Elektrisches Installationsgerät nach einem der vorhergehenden Patentansprüche, **dadurch gekennzeichnet, dass** ein Modul (9) flächenbündig in einem Aufnahmeraum (14) des Gerätesockels (4) anordenbar ist.

15. Elektrisches Installationsgerät nach einem der vorhergehenden Patentansprüche, **dadurch gekennzeichnet, dass** das elektrische Installationsgerät (1) als elektrische Steckdose, als Schalter und/ oder als Taster ausgeführt ist.

## Claims

1. An electrical installation device (1) comprising a device socket (4) which can be fastened in an installation housing (2) by means of a support frame (5), and a front element (6) fastened at a front side, wherein contact elements arranged in the device socket (4) are connectable to a mains voltage,
**characterized in that**,
after the fastening in the installation housing (2), the installation device (1) is expanded at the front side by at least two modules, namely by a first module (9) and by at least one second module (10), said modules including electrical elements, cooperating functionally and being arranged at different components (4, 6) of the installation device (1); and
**in that** an automatic electrical contacting takes place on a mechanical positioning of the modules (9, 10) at the front element (6), at the device socket (4) and/or of the modules (9, 10) with respect to another.

2. An electrical installation device in accordance with claim 1, **characterized in that** the one module (9) includes higher-ranking functions and/or functions internal to the device; and **in that** the other module (10) includes functions relevant to the user.

3. An electrical installation device in accordance with one of the preceding claims, **characterized in that** signals are generated in the one module (9) and are transmitted to the other module (10).

4. An electrical installation device in accordance with any one of the preceding claims, **characterized in that** signals can be received, converted and/or forwarded in the second module (9).

5. An electrical installation device in accordance with any one of the preceding claims, **characterized in that** the mains voltage is transformed in one module (9) and is then conducted to the other module (10).

6. An electrical installation device in accordance with any one of the preceding claims, **characterized in that** the modules (9, 10) are mechanically, electrically and/or optically connectable via complementary interfaces (11, 12).

7. An electrical installation device in accordance with claim 6, **characterized in that** the interfaces (11, 12) are integrated into the modules (9, 10) at the housing side.

8. An electrical installation device in accordance with one of the preceding claims 6 or 7, **characterized in that** contacts (13) are arranged protected against contact in the interfaces (11, 12).

9. An electrical installation device in accordance with any one of the preceding claims, **characterized in that** optical and/or acoustic signal generators (17) are arranged in a module (10).

10. An electrical installation device in accordance with any one of the preceding claims, **characterized in that** manual control devices are arranged in a module (10).

11. An electrical installation device in accordance with any one of the preceding claims, **characterized in that** the modules (9, 10) are externally programmable.

12. An electrical installation device in accordance with any one of the preceding claims, **characterized in that** one module (9) is arranged at the device socket (4) and one module (10) is arranged at the front element (6).

13. An electrical installation device in accordance with any one of the preceding claims, **characterized in that** the modules (9, 10) are releasably fastenable to the device socket (4) and/or to the front element (6).

14. An electrical installation device in accordance with any one of the preceding claims, **characterized in that** a module (9) can be arranged with areal alignment in a reception space (14) of the device socket (4).

15. An electrical installation device in accordance with any one of the preceding claims, **characterized in that** the electrical installation device (1) is configured as an electrical socket, as a switch and/or as a push-button.

## Revendications

1. Dispositif d'installation électrique (1) comprenant un socle de dispositif (4) qui peut être fixé dans un boîtier d'installation (2) à l'aide d'un cadre de support (5), et un élément frontal (6) fixé à du côté frontal, des éléments de contact disposés dans le socle de dispositif (4) pouvant être connectés à une tension secteur,
**caractérisé en ce que**
après la fixation dans le boîtier d'installation (2), le dispositif d'installation (1) est complété du côté frontal par au moins deux modules, à savoir par un premier module (9) et par au moins un second module (10), qui comportent des composants électriques, qui coopèrent fonctionnellement et qui sont disposés sur différents composants (4, 6) du dispositif d'installation (1), et **en ce que**
une mise en contact électrique automatique s'effectue lors d'un positionnement mécanique des modules (9, 10) sur l'élément frontal (6), sur le socle de dispositif (4) et/ou lors d'un positionnement des modules (9, 10) l'un par rapport à l'autre.

2. Dispositif d'installation électrique selon la revendication 1,
**caractérisé en ce que**
un module (9) contient des fonctions de niveau supérieur et/ou des fonctions internes au dispositif et l'autre module (10) contient des fonctions pertinentes pour l'utilisateur.

3. Dispositif d'installation électrique selon l'une des revendications précédentes,
**caractérisé en ce que**
des signaux sont générés dans un module (9) et sont transférés à l'autre module (10).

4. Dispositif d'installation électrique selon l'une des revendications précédentes,
**caractérisé en ce que**
des signaux peuvent être reçus, convertis et/ou transmis dans le second module (10).

5. Dispositif d'installation électrique selon l'une des revendications précédentes,
**caractérisé en ce que**
la tension secteur est transformée dans un module (9), puis transmise à l'autre module (10).

6. Dispositif d'installation électrique selon l'une des revendications précédentes,
**caractérisé en ce que**
les modules (9, 10) sont susceptibles d'être reliés par voie mécanique, électrique et/ou optique via des interfaces complémentaires (11, 12).

7. Dispositif d'installation électrique selon la revendication 6,
**caractérisé en ce que**
les interfaces (11, 12) sont intégrées dans les modules (9, 10) du côté boîtier.

8. Dispositif d'installation électrique selon l'une des revendications précédentes 6 ou 7,
**caractérisé en ce que**
des contacts (13) sont disposés dans les interfaces (11, 12) en étant protégés contre les contacts accidentels.

9. Dispositif d'installation électrique selon l'une des revendications précédentes,
**caractérisé en ce que**
des générateurs de signaux (17) optiques et/ou acoustiques sont disposés dans un module (10).

10. Dispositif d'installation électrique selon l'une des revendications précédentes,
**caractérisé en ce que**
des émetteurs d'ordres manuels sont disposés dans un module (10).

11. Dispositif d'installation électrique selon l'une des revendications précédentes,
**caractérisé en ce que**
les modules (9, 10) sont programmables par voie externe.

12. Dispositif d'installation électrique selon l'une des revendications précédentes,
**caractérisé en ce que**
un module (9) est disposé sur le socle de dispositif (4) et un module (10) est disposé sur l'élément frontal (6).

13. Dispositif d'installation électrique selon l'une des revendications précédentes,
**caractérisé en ce que**
les modules (9, 10) sont susceptibles d'être fixés de façon amovible au socle de dispositif (4) et/ou à l'élément frontal (6).

14. Dispositif d'installation électrique selon l'une des revendications précédentes,
**caractérisé en ce que**
un module (9) est susceptible d'être disposé en affleurement dans un espace de logement (14) du socle de dispositif (4).

15. Dispositif d'installation électrique selon l'une des revendications précédentes,
**caractérisé en ce que**
le dispositif d'installation électrique (1) est réalisé sous forme de prise électrique, d'interrupteur et/ou de bouton.
